# EUROPÄISCHE PATENTSCHRIFT

(11) **EP 3 459 340 B1**
(45) Veröffentlichungstag und Bekanntmachung des Hinweises auf die Patenterteilung: **30.12.2020**
(21) Anmeldenummer: 18183840.0
(22) Anmeldetag: 17.07.2018
(51) Int. Cl.: A01F 15/07

(54) **ZUFÜHREINRICHTUNG ZUR ZUFÜHRUNG VON WICKELMATERIAL IN EINE PRESSKAMMER EINER RUNDBALLENPRESSE**
FEEDER DEVICE FOR FEEDING WRAPPING MATERIAL INTO A PRESSING CHAMBER OF A ROUND BALER
DISPOSITIF D'AMENÉE DESTINÉ À AMENER UN MATÉRIAU D'ENROULEMENT DANS UNE CHAMBRE DE COMPRESSION D'UNE PRESSE À BALLES RONDES

(30) Priorität: 25.09.2017 DE 102017122138
(43) Veröffentlichungstag der Anmeldung: 27.03.2019
(73) Patentinhaber: Usines CLAAS France S.A.S, 57140 St. Rémy / Woippy (FR)
(72) Erfinder: Vagnier, Vincent, 88170 Saint Menge (FR); Vaillant, Jean- Francois, 57130 Ancy Sur Moselle (FR)
(74) Vertreter: CLAAS Gruppe

(56) Entgegenhaltungen:
- EP-A1- 0 293 025
- DE-A1- 19 517 385
- DE-A1-102004 001 773
- GB-A- 2 163 701

## Beschreibung

Die vorliegende Anmeldung betrifft Zuführeinrichtung gemäß dem Oberbegriff von Anspruch 1 sowie eine landwirtschaftliche Rundballenpresse, die mit einer solchen Zuführeinrichtung ausgestattet ist.

Die Zuführeinrichtung umfasst insbesondere eine Zuführrolle, mittels derer das Wickelmaterial von einer zugehörigen Wickelrolle abziehbar und einer Presskammer einer Rundballenpresse zuführbar ist. Das der Presskammer zugeführte Wickelmaterial kann sodann verarbeitet werden, um einen jeweils erstellten Rundballen mittels des Wickelmaterials zu umwickeln. Das Wickelmaterial kann beispielsweise von einer Folie oder einem Netz gebildet sein. Weitere Wickelmaterialien sind selbstverständlich ohne Weiteres denkbar. Die Zuführeinrichtung verfügt über mindestens eine Schneidvorrichtung, mittels derer das Wickelmaterial nach einer vollständigen Einwicklung eines jeweiligen Rundballens durchgeschnitten werden kann.

Zuführeinrichtungen der eingangs beschriebenen Art sind im Stand der Technik bereits bekannt. Hierzu wird beispielhaft auf die europäische Patentanmeldung EP 0 293 025 A1 hingewiesen. Diese befasst sich mit einer Problemstellung, die im Zuge des Durchschneidens des Wickelmaterials nach vollständiger Umwicklung eines jeweiligen Rundballens auftreten kann. Diese Problemstellung ist insbesondere dann zu beachten, wenn das Wickelmaterial elastische Eigenschaften aufweist, was typischerweise der Fall ist, und im Zuge des Durchschneidens mittels einer jeweiligen Schneideinrichtung zumindest in einem gewissen Umfang elastisch gestreckt wird. In einer solchen Konstellation kann es nämlich dazu kommen, dass im Moment des Schnitts mittels der Schneideinrichtung die in dem Wickelmaterial infolge der Streckung herrschenden, elastischen Rückstellkräfte freigesetzt werden, wodurch sich das Wickelmaterial schlagartig zusammenzieht. Hierbei kann es schnell dazu kommen, dass das Wickelmaterial aufgrund seines über einen Reibschluss hergestellten kraftübertragenden Kontakts mit der Zuführrolle eine Beschleunigung der letzteren in eine der eigentlichen Antriebsrichtung entgegengesetzte Drehrichtung verursacht. Hierdurch wird das Wickelmaterial, dass sich in Eingriff mit der Zuführrolle befindet, gewissermaßen aufgrund der falsch gerichteten Rotation der Zuführrolle von letzterer abgerollt und befindet sich sodann nicht länger in Kontakt mit der Zuführrolle. Die Verwendung des Wickelmaterials für einen weiteren Rundballen bedarf sodann eines händischen Eingriffs in Form einer erneuten Zuführung des Wickelmaterials zu der Zuführrolle.

Um die unbeabsichtigte Drehung der Zuführrolle in die "falsche" Richtung zu vermeiden, schlägt die genannte Patentanmeldung vor, die Zuführrolle mit einer Sperreinrichtung zu versehen, die eine derartige Drehung blockiert. Im Einzelnen wird eine Sperrklinke vorgeschlagen, die formschlüssig mit umlaufenden Sperrzinken der Zuführrolle eingreifen kann, wobei infolge des Eingriffs eine Rotation der Zuführrolle vollständig blockiert ist. Dieses Blockieren der Rotation wird mittels einer mechanischen Kopplung automatisch immer nur dann bewirkt, während das Wickelmaterial mittels der jeweiligen Schneideinrichtung durchgeschnitten wird.

Im Betrieb von hier behandelten Zuführeinrichtungen kann es weiterhin dazu kommen, dass sich das Wickelmaterial unbeabsichtigter Weise um die Zuführrolle wickelt und somit gewissermaßen darauf aufwickelt. Dies kann beispielsweise infolge unbeabsichtigter Adhäsion zwischen einer äußeren Mantelfläche der Zuführrolle und dem Wickelmaterial auftreten, die unter anderem durch Feuchtigkeit entstehen kann. Sobald es zu einer beschriebenen Aufwicklung des Wickelmaterials auf der Zuführrolle kommt, ist in jedem Fall der manuelle Eingriff eines jeweiligen Maschinenführers vonnöten. Insbesondere muss die Zuführrolle entgegen ihrer eigentlichen Antriebsrichtung händisch gedreht werden, um das fälschlicherweise aufgewickelte Wickelmaterial wieder von der Zuführrolle abzuwickeln. Dabei versteht es sich, dass eine vorstehend beschriebene Sperreinrichtung, die genau eine solche Drehung der Zuführrolle verhindern soll, bei dieser Wartungsmaßnahme hinderlich ist. In der Praxis führt dies regelmäßig dazu, dass ein jeweiliger Maschinenführer umständlich dafür sorgen muss, dass die Sperreinrichtung die "falsch" gerichtete Drehung der Zuführrolle freigibt und dass das Wickelmaterial von der Zuführrolle abgewickelt wird. Abgesehen von dem besonders unbequemen Charakter dieser Tätigkeit ist selbstverständlich auch ein wirtschaftlicher Verlust infolge einer entsprechenden Stillstandzeit der jeweiligen Rundballenpresse zu beklagen.

Der vorliegenden Anmeldung liegt mithin die Aufgabe zugrunde, die Wartung einer Zuführeinrichtung zu erleichtern.

Die zugrunde liegende Aufgabe wird mittels einer Zuführeinrichtung mit den Merkmalen des Anspruchs 1 gelöst. Vorteilhafte Ausgestaltungen sind den Unteransprüchen 2 bis 10 entnehmbar.

Die "Zuführrolle" beschreibt im Sinne der vorliegenden Anmeldung eine rotationssymmetrische, um eine Rotationsachse drehbar gelagerte Rolle bzw. Walze, deren Länge typischerweise deren Durchmesser deutlich übersteigt. Insofern handelt es sich um eine "langgestreckte Zuführrolle". Eine solche Zuführrolle kann bei Anordnung der erfindungsgemäßen Zuführeinrichtung an einer jeweiligen Rundballenpresse mit einem jeweiligen Antrieb gekoppelt sein, beispielsweise mittels eines Riementriebs, eines hydraulischen oder elektrischen Antriebs, sodass die Zuführrolle aktiv antreibbar ist. Auf diese Weise ist sie besonders gut geeignet, das Wickelmaterial aktiv von der zugehörigen Wickelrolle, auf der das Wickelmaterial vorgehalten wird, abzuziehen und der Presskammer zuzuführen.

Eine Kraftübertragung zwischen der Zuführrolle und dem Wickelmaterial erfolgt in erster Linie aufgrund eines Reibschlusses zwischen einer äußeren Mantelfläche der Zuführrolle und einer dieser zugewandten Oberfläche des Wickelmaterials. Um diesen Reibschluss dauerhaft sicherzustellen, verfügt die Zuführeinrichtung über eine "Andrückrolle", die gegen die Zuführrolle verspannbar ist. Die Andrückrolle ist gleichermaßen rotationssymmetrisch ausgebildet und mit ihrer Rotationsachse parallel zu der Zuführrolle orientiert. Die Andrückrolle dient dazu, das Wickelmaterial gegen die Mantelfläche der Zuführrolle zu drücken und auf diese Weise eine zuverlässige Kraftübertragung von der Zuführrolle auf das Wickelmaterial sicherzustellen. Das Wickelmaterial wird demzufolge gewissermaßen in einem Führungsspalt geführt, der von der Zuführrolle sowie von der Andrückrolle begrenzt ist.

Die erfindungsgemäße Zuführeinrichtung umfasst weiterhin eine Sperreinrichtung, die zwischen einer Wartungsstellung und einer Sperrstellung überführbar ist. Bei Vorliegen in ihrer Wartungsstellung hat die Sperreinrichtung keinen sperrenden Effekt auf die Zuführrolle; das heißt, dass die Zuführrolle grundsätzlich frei ist, sich sowohl in ihre Antriebsrichtung als auch in eine entgegengesetzte Drehrichtung um ihre Rotationsachse zu drehen. Bei Vorliegen der Sperreinrichtung in ihrer Sperrstellung bewirkt sie zumindest eine solche Blockierung der Zuführrolle, dass eine Rotation derselben entgegen ihrer Antriebsrichtung verhindert ist.

Erfindungsgemäß ist die Sperreinrichtung nunmehr derart ausgebildet, dass sie in ihrer Wartungsstellung feststellbar ist. "Feststellbar" bedeutet im Sinne der vorliegenden Anmeldung, dass die Sperreinrichtung im Zuge einer Wartung der Zuführeinrichtung ohne manuelles Zutun des Maschinenführers nach Überführung von ihrer Sperrstellung in ihre Wartungsstellung in letzterer verbleibt.

Die erfindungsgemäße Zuführeinrichtung hat viele Vorteile. Insbesondere ist ein "Herunterfallen" oder "Zurückschnellen" der Sperreinrichtung nach ihrer Überführung in ihre Wartungsstellung, dem manuell händisch entgegengewirkt werden müsste, nicht länger notwendig. Dies hat den besonderen Vorteil, dass der Maschinenführer sodann im Weiteren

beide Hände frei hat, um beispielsweise das versehentlich auf die Zuführrolle aufgewickelte Wickelmaterial von ersterer zu entfernen und die Zuführeinrichtung somit möglichst zügig wieder in einen betriebsbereiten Zustand zu versetzen.

Bei der erfindungsgemäßen Zuführeinrichtung wirkt die Zuführrolle mit einer Rastzahnscheibe zusammen, die drehmomentenfest mit der Zuführrolle verbunden ist. Eine solche Rastzahnscheibe kann insbesondere entlang ihres Umfangs über eine Vielzahl von Rastzähnen verfügen, die im Sinne der Antriebsrichtung der Zuführrolle flach ansteigend verlaufen und schließlich mittels eines Steilabschnitts steil zurück auf das Niveau des Umfangs der Rastzahnscheibe zurückfallen. Die Rastzähne bilden auf diese Weise insgesamt ein sägezahnförmiges Profil. Eine derartige Rastzahnscheibe ist besonders gut geeignet, mit der jeweiligen Sperreinrichtung formschlüssig einzugreifen. Letztere kann hierzu beispielsweise über eine auslenkbare Sperrklinke verfügen, die mittels einer Vorspannung oder einer Federkraft fortwährend auf den Umfang der Rastzahnscheibe niedergehalten wird und sich somit dauerhaft in Kontakt mit den Rastzähnen der Rastzahnscheibe befindet. Sollte es nunmehr zu einer Rotation der Zuführrolle in die entgegen ihrer Antriebsrichtung gerichtete Drehrichtung kommen, würde diese Rotation aufgrund der Koppelung der Zuführrolle mit der Rastzahnscheibe sowie des unmittelbaren stumpfen Anschlags der Sperrklinke der Sperreinrichtung an einem Steilabschnitt eines jeweiligen Rastzahns blockiert.

Weiterhin ist eine solche Zuführeinrichtung von besonderem Vorteil, deren Andrückrolle zwischen einer Spannstellung und einer Freistellung überführbar ist, wobei bei Vorliegen der Andrückrolle in ihrer Spannstellung jeweilig in dem Führungsspalt geführtes Wickelmaterial gegen die Zuführrolle gedrückt ist. Hingegen befindet sich die Andrückrolle bei Vorliegen in ihrer Freistellung in einem gewissen Abstand von der Zuführrolle, sodass eine Breite des Führungsspalts gegenüber einem Zustand, in dem die Andrückrolle in ihrer Spannstellung vorliegt, vergrößert ist. Insbesondere nimmt die Breite des Führungsspalts einen Wert an, der eine Dicke des Wickelmaterials deutlich übersteigt. Auf diese Weise ist sichergestellt, dass das Wickelmaterial nicht durch Wirkung der Andrückrolle gegen die Mantelfläche der Zuführrolle gedrückt ist. Die Freistellung der Andrückrolle dient mithin insbesondere zu Wartungszwecken der Zuführeinrichtung, wobei beispielsweise Wickelmaterial in den Führungsspalt einführbar oder eine entgegen der Antriebsrichtung gerichtete Drehung der Zuführrolle durchführbar sind. Vor der Inbetriebnahme der Zuführeinrichtung sollte die Andrückrolle jedoch unbedingt in ihrer Spannstellung überführt werden.

Vorteilhafterweise verfügt die erfindungsgemäße Zuführeinrichtung über mindestens eine Spanneinrichtung, die die beschriebene Überführung der Andrückrolle zwischen ihrer Freistellung und ihrer Spannstellung bewerkstelligen kann. Vorzugsweise verfügt die Spanneinrichtung über mindestens ein Spannelement, das relativ zu der Andrückrolle beweglich ausgebildet ist. Weiterhin umfasst eine solche Spanneinrichtung mindestens eine Feder, mittels derer das Spannelement gegen die Andrückrolle verspannbar ist. Die Feder kann insbesondere gegen korrespondierende Stützflächen des Spannelements und der Andrückrolle abgestützt sein. Die Überführung einer jeweiligen Andrückrolle von ihrer Freistellung in ihrer Spannstellung kann unter Verwendung einer derartigen Spanneinrichtung beispielsweise dadurch bewirkt werden, dass das Spannelement in eine Richtung auf die Zuführrolle zu relativ zu der Andrückrolle bewegt wird, wodurch die Feder komprimiert wird und gegen ihre Stützflächen jeweils eine Druckkraft ausübt. Die der Andrückrolle zugeordnete Stützfläche führt zu einer Übertragung dieser Druckkraft auf die Andrückrolle gleichfalls in Richtung auf die Zuführrolle zu. Auf diese Weise die Andrückrolle somit gegen die Zuführrolle "gespannt". Das Spannelement kann zur Konservierung der in der Feder gespeicherten Druckkraft beispielsweise in seiner ausgelenkten Stellung fixiert werden.

Vorteilhafterweise kann die Zuführeinrichtung über mindestens einen Spannhebel verfügen, der mit der Spanneinrichtung zusammenwirken kann. Mittels eines solchen Spannhebels kann besonders einfach - beispielsweise unter Ausnutzung eines Hebelarms - eine beträchtliche Spannkraft auf die Spanneinrichtung ausgeübt und dadurch die Andrückrolle gegen die Zuführrolle verspannt werden.

Vorteilhafterweise ist der Spannhebel an der Zuführeinrichtung schwenkbar gelagert, wobei eine Schwenkachse des Spannhebels ausmittig zu einer Mittelachse desselben angeordnet ist. Dies hat zur Folge, dass eine Verschwenkung des Spannhebels um seine Schwenkachse unweigerlich zu einer Bewegung des Spannhebels mit einem translatorischen Anteil führt, wobei sich die Mittelachse des Spannhebels auf einer Kreisbahn um die Schwenkachse bewegt. Mit anderen Worten kann mittels einer Verschwenkung des Spannhebels dessen räumliche Verlagerung in eine Richtung senkrecht zu seiner Mittelachse bewirkt werden. Dieser Effekt lässt sich dafür einsetzen, beispielsweise ein Spannelement der Spanneinrichtung "mitzuschleppen" und auf diese Weise die Andrückrolle gegen die Zuführrolle zu ziehen. Der vorstehend beschriebene Mechanismus unter Verwendung eines Spannelements sowie einer Feder ist hierfür besonders geeignet.

Dabei ist es in einer weiterhin vorteilhaften Ausgestaltung denkbar, ein solches Spannelement der Spanneinrichtung mit mindestens einem Hakenabschnitt zu versehen, der sich in formschlüssiger Weise um den Spannhebel legen kann. Auf diese Weise ist eine Kraftübertragung zwischen dem Spannhebel und dem Spannelement möglich, der zu der vorstehend beschriebenen, wünschenswerten Verspannung der Andrückrolle gegen die Zuführrolle führt. In dieser Konstellation sollte sich das Spannelement mit seiner Längsachse insbesondere senkrecht zu der Schwenkachse des Spannhebels erstrecken. Weiterhin ist bei einer solchen Ausführung die Schwenkachse des Spannhebels vorteilhafterweise parallel zu der Rotationsachse der Zuführrolle orientiert.

Im Sinne einer besonders nutzerfreundlichen Wartung der Zuführeinrichtung umfasst selbige in einer weiteren Ausgestaltung mindestens ein Koppelelement, mittels dessen die Spanneinrichtung mit der Sperreinrichtung koppelbar ist. Unter dieser "Kopplung" wird im Sinne der vorliegenden Anmeldung verstanden, dass eine Verbindung zwischen der Spanneinrichtung und der Sperreinrichtung hergestellt ist, die im Zuge einer Betätigung der Spanneinrichtung automatisch eine Betätigung der Sperreinrichtung hervorruft. Dies geschieht derart, dass eine Überführung der Andrückrolle von ihrer Spannstellung in ihrer Freistellung automatisch eine Überführung der Sperreinrichtung von ihrer Sperrstellung in ihre Wartungsstellung bewirkt. Eine solche Koppelung ist von besonderem Vorteil für den Wartungsprozess, da in aller Regel beide Einrichtungen, nämlich sowohl die Spanneinrichtung als auch die Sperreinrichtung, "deaktiviert" werden müssen, um einen freien Zugriff auf die Zuführrolle zu erhalten. Dies gilt insbesondere für den beschriebenen Fall der notwendigen Abwicklung von versehentlich auf der Zuführrolle aufgewickelten Wickelmaterials.

Vorteilhafterweise bewirkt das Koppelelement nicht nur die Überführung der Sperreinrichtung in deren Wartungsstellung, sondern sorgt ferner für die Feststellung der Sperreinrichtung in der Wartungsstellung. Um dieses Ergebnis zu erzielen ist es beispielsweise denkbar, das Koppelelement in Form einer Nockenscheibe auszuführen, die mindestens einen Nocken aufweist. Die Sperreinrichtung kann in dieser Konstellation mindestens eine der Nockenscheibe zugeordnete Druckfläche umfassen, wobei die Nockenscheibe derart mit der Spanneinrichtung zusammenwirkt, dass eine Überführung der letzteren von ihrer Spannstellung in ihre Freistellung mit einer Rotation der Nockenscheibe einhergeht, sodass der Nocken der Nockenscheibe gegen die Druckfläche der Sperreinrichtung drückt. Letzteres kann sodann unmittelbar eine Bewegung der Sperreinrichtung hervorrufen, beispielsweise im Wege einer Verschwenkung der Sperreinrichtung um eine von der Druckfläche beabstandete Drehachse. Beispielsweise ist es denkbar, die Sperreinrichtung an ihrem einen Ende mittels des Nockens herunterzudrücken und diese Bewegung mittels einer beabstandeten Drehachse in eine Anhebung einer Sperrklinke der Sperreinrichtung zu übersetzen, wobei die Sperrklinke auf einer der Druckfläche abgewandten Seite der Drehachse angeordnet ist. Eine entsprechende Ausführung ist auch dem nachstehenden Ausführungsbeispiel entnehmbar.

Für die benutzerfreundliche Wartung kann es dabei grundsätzlich unabhängig von der sonstigen Ausgestaltung der Zuführeinrichtung vorteilhaft sein, die Spanneinrichtung als Ganzes verschwenkbar auszugestalten, um einen manuellen Zugriff auf den Führungsspalt zu erleichtern.

Die dieser Anmeldung zugrunde liegende Aufgabe wird ferner mittels einer landwirtschaftlichen Rundballenpresse mit den Merkmalen des Anspruchs 10 gelöst. Diese ist insbesondere mit einer erfindungsgemäßen Zuführeinrichtung ausgestattet.

Die erfindungsgemäße Rundballenpresse ist demzufolge insoweit besonders von Vorteil, als ihre Wartung im Vergleich zu bekannten Rundballenpressen sehr einfach und zügig möglich ist, wodurch Stillstandzeiten reduziert werden können und zudem die Ergonomie für den Maschinenführer deutlich gesteigert wird.

Das erfindungsgemäße Zuführeinrichtung sowie die erfindungsgemäße Ballenpresse werden nachstehend anhand von Ausführungsbeispielen, die in den Figuren dargestellt sind, näher erläutert. Es zeigt:
- Fig. 1:: Einen Querschnitt durch eine Rundballenpresse gemäß dem Stand der Technik,
- Fig. 2:: Ein Detail einer erfindungsgemäßen Zuführeinrichtung, die an einer Rundballenpresse montiert ist,
- Fig. 3:: Eine isometrische Ansicht der Zuführeinrichtung gemäß Figur 2,
- Fig. 4:: Die isometrische Ansicht gemäß Figur 3, wobei sich die Zuführeinrichtung in einem Wartungsmodus befindet,
- Fig. 5:: Eine isometrische Ansicht einer weiteren Zuführeinrichtung, die an einer Rundballenpresse montiert ist,
- Fig. 6:: Die isometrische Ansicht gemäß Figur 5, wobei sich die Zuführeinrichtung in einem Wartungsmodus befindet, und
- Fig. 7:: Ein Detail einer Sperreinrichtung der Zuführeinrichtung gemäß Figur 5.

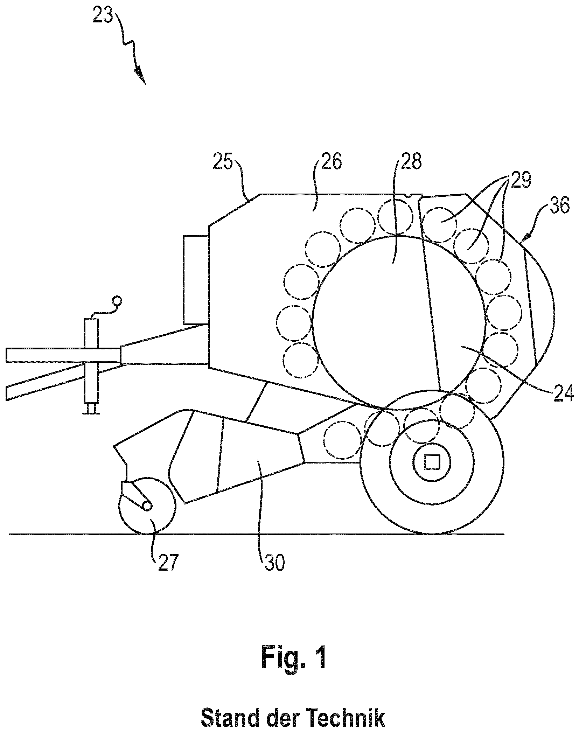

Eine erfindungsgemäße Zuführeinrichtung 1 ist insbesondere dazu geeignet, mit einer Rundballenpresse 23 zusammenzuwirken, wobei mittels der Zuführeinrichtung 1 ein Wickelmaterial **2** der Rundballenpresse **23** zugeführt wird, sodass das Wickelmaterial **2** auf einen Rundballen **24,** der in einer Presskammer **28** gepresst wurde, aufgetragen werden kann. Eine entsprechende Rundballenpresse **23,** die als solche im Stand der Technik bekannt ist, ist beispielhaft in **Figur 1** dargestellt. Die dort gezeigte Rundballenpresse **23** umfasst ein Gehäuse **25,** das einen Innenraum **26** begrenzt. Innerhalb dieses Innenraums **26** erstreckt sich in eine Querrichtung der Rundballenpresse **23** eine Vielzahl von Profilwalzen **29,** die gemeinsam die Presskammer **28** begrenzen. Die Profilwalzen **29** sind um ihre Längsachse drehantreibbar gelagert, sodass Erntegut, dass mittels einer Fördereinrichtungen **27** durch einen Förderkanal **30** in die Presskammer **28** gefördert wird, sukzessive innerhalb der Presskammer **28** zu einem zumindest im Wesentlichen rotationssymmetrischen Rundballen **24** gepresst wird. Nach der vollständigen Erstellung eines jeweiligen Rundballens **24** wird letzterer durch eine hintere Auswurftür **36** aus der Rundballenpresse **23** ausgeworfen. Um den Rundballen **24** davor zu schützen, nach seinem Auswurf aus der Rundballenpresse **23** wieder zu "zerfallen", ist es üblich, einen jeweiligen Rundballen **24** mit einem Wickelmaterial **2** zu umwickeln und auf diese Weise zu stabilisieren. Das Wickelmaterial **2** kann beispielsweise von einer Folie oder einem Netz gebildet sein. Die Verwendung einer Folie bietet dabei neben der Stabilisierung den Vorteil, dass das gepresste Erntegut vor Witterungseinflüssen geschützt ist.

Um einen jeweiligen Rundballen **24** mit Wickelmaterial **2** zu umwickeln bzw. einzufassen, verfügen heutige Rundballenpressen **23** typischerweise über eine Zuführeinrichtung, mittels derer das jeweilige Wickelmaterial **2** der Presskammer **28** zuführbar ist. Hierbei wird das Wickelmaterial **2** in einen Spalt zwischen eine äußere Mantelfläche des fertig gestellten Rundballens **24** und die Profilwalzen **29** eingebracht. Die Rotation der Profilwalzen **29** führt sodann dazu, dass das Wickelmaterial **2** durch diesen Spalt gezogen wird, bis es schließlich den Rundballen **24** vollständig einfasst. In aller Regel wird ein jeweiliger Rundballen **24** mit mehreren Schichten des Wickelmaterials **2** umwickelt.

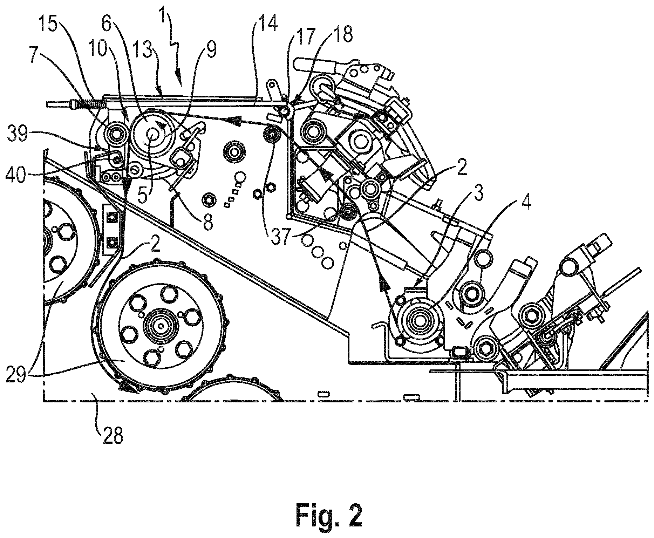

Die Aufgabe der Zuführeinrichtung besteht mithin darin, ein jeweiliges Wickelmaterial **2,** das auf einer Wickelrolle **4** vorgehalten wird, der Presskammer **28** der zugehörigen Rundballenpresse **23** zuzuführen. Eine erste erfindungsgemäße Zuführeinrichtung **1,** die diesen Zweck erfüllt, ist hier beispielhaft in den **Figuren 2 bis 4** dargestellt. Diese Zuführeinrichtung **1** umfasst eine Rollenhalterung **3,** die mit einer Wickelrolle **4** bestückt ist. Die Wickelrolle **4** ist an der Rollenhalterung **3** um eine Rotationsachse drehbar gelagert, sodass auf der Wickelrolle **4** vorgehaltenes Wickelmaterial **2** sukzessive von der Wickelrolle **4** abgewickelt werden kann.

Das Wickelmaterial 2 wird ausgehend von der Wickelrolle 4 einer Zuführrolle 6 zugeführt, wobei das Wickelmaterial 2 mittels zweier Umlenkrollen 37 umgelenkt wird. Die Zuführrolle 6 ist um eine Rotationsachse 5 drehantreibbar gelagert, sodass sie in eine Antriebsrichtung 9 antreibbar ist. Hierfür ist die Zuführrolle 6 mittels eines Keilriemens 32 mit einer Antriebsscheibe 31 in Kraft übertragender Weise gekoppelt. Die Antriebsscheibe 31 ist einer der Profilwalzen 29 der jeweiligen Rundballenpresse 23 zugeordnet. Die Zuführrolle 6 dient dazu, das Wickelmaterial 2 von der Wickelrolle 4 abzuwickeln bzw. abzuziehen und in Richtung der Presskammer 28 der zugehörigen Rundballenpresse 23 zu führen. Um eine Kraftübertragung zwischen dem Wickelmaterial 2 und der Zuführrolle 6 zu gewährleisten, wird das Wickelmaterial 2 mittels einer Andrückrolle 7 auf eine äußere Mantelfläche der Zuführrolle 6 gedrückt. Die Andrückrolle 7 und die Zuführrolle 6 begrenzen hierzu gemeinsam einen Führungsspalt 10, in dem das Wickelmaterial 2 geführt ist. Die Andrückrolle 7 sorgt dafür, dass zwischen der Zuführrolle 6 und dem Wickelmaterial 2 eine ausreichend große Reibung erzeugt wird, die den "Antrieb" des Wickelmaterials 2 sicherstellt.

Um eine ausreichende Andrückkraft zwischen der Andrückrolle **7** und der Zuführrolle **6** sicherzustellen, wirkt die Andrückrolle **7** in dem gezeigten Beispiel mit einer Spanneinrichtung **13** zusammen. Diese ist in Kraft übertragender Weise mit der Andrückrolle **7** gekoppelt. Die Spanneinrichtung **13** ist mittelbar über einen Lagerrahmen **39** mit der Andrückrolle **7** verbunden. Der Lagerrahmen **39** ist seinerseits an einer Lagerachse **40** verdrehbar gelagert, wobei die Andrückrolle **7** derart von der Lagerachse **40** beabstandet angeordnet ist, dass eine Verdrehung des Lagerrahmen **39** um seine Lagerachse **40** zu einer translatorischen Bewegung der Andrückrolle **7** auf einer Kreisbahn um die Lagerachse **40** führt. Die Spanneinrichtung **13** ist an einem der Lagerachse **40** abgewandten Ende des Lagerrahmens **39** angeordnet. Sie dient dazu, eine Spannkraft auf den Lagerrahmen **39** und mithin auf die Andrückrolle **7** auszuüben, sodass die Andrückrolle **7** gegen die Zuführrolle **6** verspannt wird.

Hierzu verfügt die Spanneinrichtung **13** über insgesamt zwei stabförmige Spannelemente **14,** die entlang ihrer Längsachse relativ zu dem Lagerrahmen **39** beweglich ausgebildet sind. Die Spannelemente **14** wirken mit einer Feder **15** zusammen, die sich gegen miteinander korrespondierende Stützflächen sowohl des jeweiligen Spannelements **14** als auch des Lagerrahmens **39** abstützt. Diese Konstruktion ermöglicht es, dass eine Bewegung eines jeweiligen Spannelements **14** von dem Lagerrahmen **39** weg eine Komprimierung der Feder **15** zur Folge hat, da sich ein Abstand zwischen den miteinander korrespondierenden Stützflächen des Spannelements **14** und des Lagerrahmen **39** reduziert. Die aufgrund der Komprimierung in der Feder **15** hervorgerufen Rückstellkraft wirkt entsprechend umgekehrt auf den Lagerrahmen **39** und drückt diesen in Richtung der Zuführrolle **6.** Aufgrund der Lagerung der Andrückrolle **7** an dem Lagerrahmen **39** gilt letzteres analog für die Andrückrolle **7.**

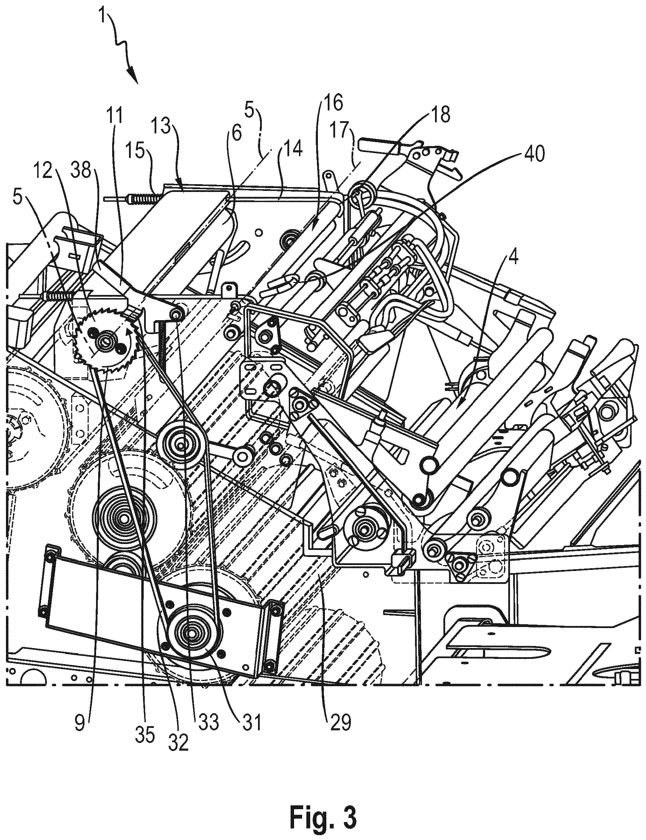

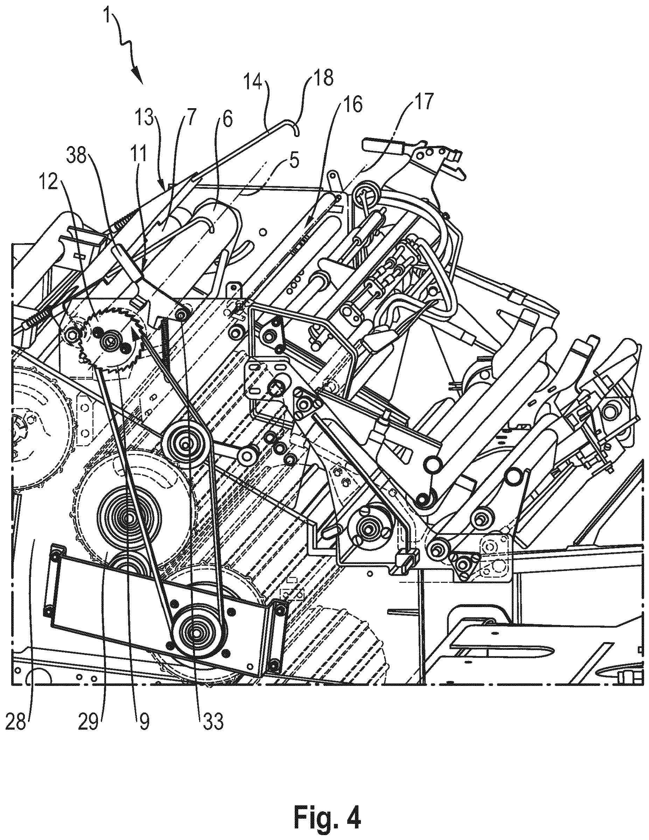

Dabei versteht es sich, dass eine der auf den Lagerrahmen **39** wirkenden Andrückkraft entsprechende Druckkraft auf die Stützfläche des Spannelements **14** wirkt. In dem Spannelement **14** herrscht demzufolge eine Zugkraft, die an anderer Stelle abgeleitet werden muss. Hierzu verfügen die Spannelemente **14** jeweils über einen Hakenabschnitt **18,** der formschlüssig mit einem Spannhebel **16** eingreifen kann. Der Spannhebel **16,** der sich besonders gut aus den **Figuren 3** **und** **4** ergibt, erstreckt sich in dem gezeigten Beispiel parallel zu der Rotationsachse **5** der Zuführrolle **6** und ist in Kraft übertragender Weise an einem Rahmen der Zuführeinrichtung **1** gelagert. Diese Lagerung ist derart ausgestaltet, dass der Spannhebel **16** um eine Schwenkachse **17** gegenüber dem Rahmen der Zuführeinrichtung **1** verschwenkbar ist, wobei die Schwenkachse **17** ausmittig zu einer Mittelachse des Spannhebels **16** angeordnet ist. Dies hat zur Folge, dass der Spannhebel **16** im Zuge seiner Verschwenkung um seine Schwenkachse **17** eine translatorische Bewegung ausführt, im Zuge derer sich ein Abstand des Spannhebels **16** von der Zuführrolle **6** bzw. der Andrückrolle **7** verändert. Es versteht sich nunmehr, dass die Spannelemente **14** mittels Eingriffs mit dem Spannhebel **16** sowie einer daraufhin erfolgenden Verschwenkung des Spannhebels **16** um dessen Schwenkachse **17** in einer solchen Weise, dass sich die Mittelachse des Spannhebels **16** in eine Richtung von der Andrückrolle **7** weg verlagert, zu einer gewünschten Aktivierung der Spannelemente **14** und damit der Ausübung einer Druckkraft auf die Andrückrolle **7** in Richtung auf die Zuführrolle **6** zu führt. Um ein hierfür notwendiges Drehmoment auf den Spannhebel **16** zu übertragen, ist dieser in dem gezeigten Beispiel mit einem Spanngriff **41** ausgestattet, der ohne Weiteres händisch bedient werden kann.

Stromabwärts der Zuführrolle **6** verfügt die Zuführeinrichtung **1** über eine Schneideinrichtung **8,** die hier mit einem Messerbalken ausgestattet ist. Letzterer erstreckt sich parallel zu der Rotationsachse **5** der Zuführrolle **6** und ist schwenkbar gelagert. Auf diese Weise ist die Schneideinrichtung **8** zwischen einer Passivstellung und einer Aktivstellung überführbar, wobei in **Figur 2** die Passivstellung der Schneideinrichtung **8** dargestellt ist. In dieser Passivstellung findet kein Eingriff zwischen der Schneideinrichtung **8** bzw. ihrem Messerbalken und dem Wickelmaterial **2** statt. Mittels Überführung der Schneideinrichtung **8** in ihrer Aktivstellung wird der Messerbalken in Richtung des Wickelmaterials **2** geschwenkt, bis schließlich ein schneidender Eingriff zustande kommt, aufgrund dessen das Wickelmaterial **2** durchgeschnitten wird.

Wie eingangs beschrieben, werden im Zuge dieses Schnitts innerhalb des Wickelmaterials **2** herrschende Rückstellkräfte freigesetzt, die zu einem schlagartigen Zurückschnellen des Wickelmaterials **2** in Richtung der Zuführrolle **6** und mithin zu einer Rotation der Zuführrolle **6** entgegen ihrer Antriebsrichtung **9** führen können. Entsprechend besteht grundsätzlich das Risiko, dass das Wickelmaterial **2** aus seinem Führungsspalt **10** herausgezogen wird, woraufhin ein abermaliger Antrieb der Zuführrolle **6** keine Wirkung auf das Wickelmaterial **2** entfalten kann. Hierzu ist zunächst eine manuelle Einführung des Wickelmaterials **2** in den Führungsspalt **10** nötig, um die mittels der Andrückrolle **7** bereitgestellte Andrückkraft nutzbar zu machen. Um das beschrieben "Zurückdrehen" der Zuführrolle **6** zu unterbinden, wirkt diese mit einer Sperreinrichtung **11** zusammen, die sich besonders gut anhand der **Figuren 3** **und** **4** ergibt.

Diese Sperreinrichtung **11** ist hier von einem Schwenkarm gebildet, der um ein Gelenk **33** drehbar gelagert ist. Dieser Schwenkarm ist mit einem Griff **38** sowie einem Eingriffelement **35** ausgestattet. Mittels des Griff **38** kann die Sperreinrichtung **11** angehoben werden, wobei sie um eine an dem Gelenk **33** ausgebildete Drehachse verschwenkt wird. Dies bewirkt, dass das Eingriffelement **35** gleichermaßen angehoben wird, sodass es seinen Kontakt mit einer der Sperreinrichtung **11** zugeordneten Rastzahnscheibe **12** verliert. Letztere ist drehmomentenfest mit der Zuführrolle **6** gekoppelt und verfügt entlang ihres Umfangs über eine Vielzahl von Rastzähnen. Diese sind von solcher Gestalt, dass eine Drehung der Zuführrolle **6** und mithin der Rastzahnscheibe **12** in die Antriebsrichtung **9** nicht mittels der Sperreinrichtung **11** blockierbar ist. Sobald es jedoch zu einer Rotation der Zuführrolle **6** in die entgegengesetzte Drehrichtung kommt, wirkt das Eingriffelement **35** der Sperreinrichtung **11** formschlüssig mit den Rastzähnen der Rastzahnscheibe **12** zusammen, wodurch die Rotation der Zuführrolle **6** unmittelbar blockiert wird. Um die Zuführrolle **6** dennoch entgegen ihrer Antriebsrichtung **9** drehen zu können, ist es erforderlich, die Sperreinrichtung **11** ausgehend von ihrer in **Figur 3** dargestellten Sperrstellung in ihre in **Figur 4** dargestellte Wartungsstellung zu überführen. Bei Vorliegen in dieser Wartungsstellung ist der formschlüssige Eingriff zwischen dem Eingriffelement **35** und der Rastzahnscheibe **12** aufgehoben, sodass die Zuführrolle **6** entgegen ihrer Antriebsrichtung **9** um ihre Rotationsachse **5** verdrehbar ist. Eine Drehung der Zuführrolle **6** entgegen ihrer Antriebsrichtung **9** kann beispielsweise notwendig werden, wenn sich das Wickelmaterial **2** versehentlich auf der Zuführrolle **6** aufwickelt, anstatt der Presskammer **28** der zugehörigen Rundballenpresse **23** zuzugehen.

Um letztlich eine Wartung der Zuführeinrichtung **1** vornehmen zu können, ist es neben der Freigabe der Rotation der Zuführrolle **6** entgegen ihrer Antriebsrichtung **9** ferner in aller Regel notwendig, einen Zugriff auf den Führungsspalt **10** zu erhalten. Um dies zu ermöglichen, kann die Spanneinrichtung **13** um die Lagerachse **40** des Lagerrahmens **39** verschwenkt werden, wobei sich ein Abstand der Andrückrolle **7** von der Zuführrolle **6** vergrößert. Wie sich unmittelbar anhand der Darstellung gemäß **Figur 4** ergibt, ist es für eine solche Verschwenkung der Spanneinrichtung **13** zunächst notwendig, die Spannelemente **14** von dem Spannhebel **16** zu lösen. Hierfür wird der Spannhebel **16** um seine Schwenkachse **17** verschwenkt, sodass sich der Spannhebel **16** in eine Richtung auf die Zuführrolle **6** zu bewegt. Auf diese Weise werden die Hakenabschnitte **18** der Spannelemente **14** freigegeben, sodass die Spannelemente **14** von dem Schwenkhebel **16** gelöst und schließlich der Lagerrahmen **39** der Andrückrolle **7** um seine Lagerachse **40** verschwenkt werden können.

Erfindungsgemäß ist die Sperreinrichtung **11** bei Vorliegen in ihrer Wartungsstellung feststellbar ausgeführt. Das heißt, dass die Sperreinrichtung **11** nicht von alleine bzw. selbsttätig ausgehend von ihrer Wartungsstellung wieder zurück in ihre Sperrstellung wandert. Dies hat den Vorteil, dass ein jeweiliger Maschinenführer eine Wartung der Zuführrolle **6,** beispielsweise infolge eines Aufwickelns von Wickelmaterial **2,** mit seinen beiden Händen durchführen kann, ohne dafür Sorge tragen zu müssen, dass die Sperreinrichtung **11** in ihrer Wartungsstellung verbleibt. Hierdurch wird zum einen die Wartung der Zuführeinrichtung **1** für den Maschinenführer angenehmer gestaltet und zum anderen die notwendige Wartungsdauer reduziert. Insgesamt kann hierdurch infolge der Wartung anfallende Stillstandzeit der jeweiligen Rundballenpresse **23** verringert werden.

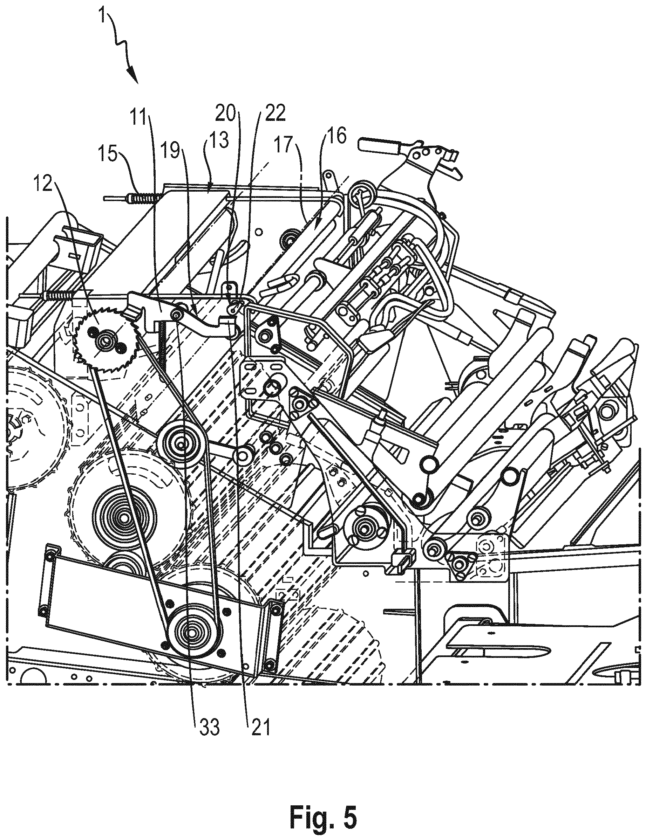

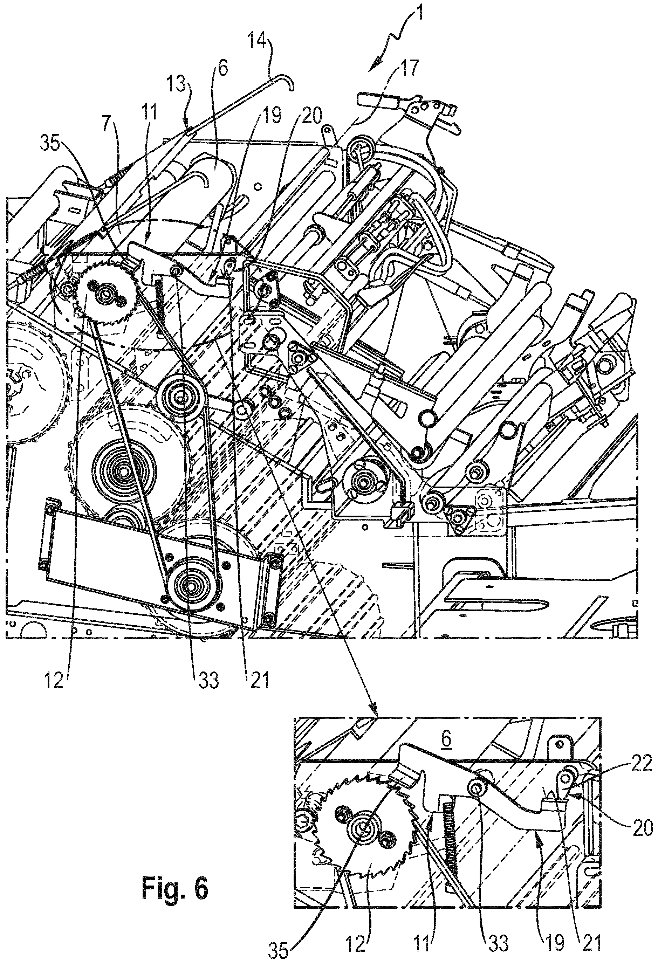

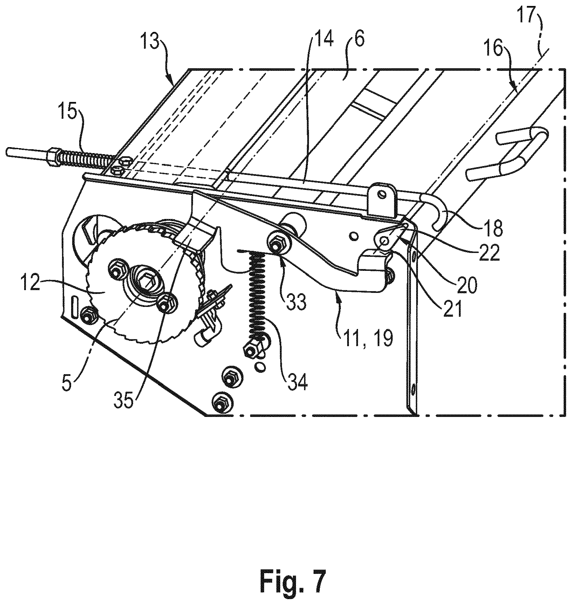

Ein weiteres Ausführungsbeispiel, das in den **Figuren 5 bis 7** dargestellt ist, ist im Wesentlichen identisch zu dem Ausführungsbeispiel gemäß den **Figuren 2 bis 4** ausgebildet. Ein wesentlicher Unterschied besteht jedoch in der Ausgestaltung der Sperreinrichtung **11.** Diese umfasst in der alternativen Ausführungsform ein sich ausgehend von dem Gelenk **33** in eine von der Zuführrolle **6** abgewandte Richtung erstreckendes Koppelelement **19.** Dieses Koppelelement **19** erstreckt sich in Richtung des Spannhebels **16.** Der Spannhebel **16** ist an seinen Lagerstellen, die der Spannhebel **16** mit dem Rahmen der Zuführeinrichtung **7** ausbildet, seinerseits mit einer Nockenscheibe **20** ausgestattet, die drehmomentenfest mit dem Spannhebel **16** gekoppelt ist. Das heißt, dass eine Verschwenkung des Spannhebels **16** um dessen Schwenkachse **17** unmittelbar zu einer Drehung der Nockenscheibe **20** um die Schwenkachse **17** führt. Die Nockenscheibe **20** ist in dem gezeigten Beispiel mit einem einzelnen Nocken **22** ausgestattet. Korrespondierend hierzu ist das Koppelelement **19** mit einer Druckfläche **21** versehen, die im Zuge einer Rotation der Nockenscheibe **20** mit dem Nocken **22** derselben eingreift. Dieser Eingriff ergibt sich besonders gut anhand der Darstellung gemäß **Figur 6****.**

Der Eingriff zwischen der Nockenscheibe **20** und dem Koppelelement **19** bewirkt, dass die Sperreinrichtung **11** um ihr Gelenk **33** verdreht wird, wodurch das Eingriffelement **35** der Sperreinrichtung **11** außer Eingriff mit der Rastzahnscheibe **12** gebracht wird. Die Ausführungsform ist weiterhin insofern von besonderem Vorteil, als das Zusammenwirken des Koppelelements **19** und der Nockenscheibe **20** neben der reinen Verstellfunktion für die Sperreinrichtung **11** ferner eine Feststellfunktion erfüllt. Somit ergibt es sich, dass die Sperreinrichtung **11** so lange in ihrer Wartungsstellung verbleibt, bis der Spannhebel **16** abermals um seine Schwenkachse **17** verschwenkt und dadurch eine Stellung des Nockens **22** relativ zu der Schwenkachse **17** verändert werden. Durch Wirkung der Schwerkraft wird die Sperreinrichtung **11** sodann abermals um ihr Gelenk **33** verschwenkt, wodurch schließlich das Eingriffelement **35** wieder in Eingriff mit der Rastzahnscheibe **12** gebracht wird. Um besagten Eingriff dauerhaft sicherstellen zu können, wirkt die Sperreinrichtung **11** hier mit einer Rückstellfeder **34** zusammen, mittels derer die Sperreinrichtung **11** gegen den Rahmen der Zuführeinrichtung **1** verspannt ist.

Die Verbindung der Nockenscheibe **20** mit dem Spannhebel **16** hat weiterhin den besonderen Vorteil, dass der Spannhebel **16** in einer Doppelfunktion nutzbar ist. Somit dient er zum einen zur Betätigung der Spanneinrichtung **13** und zum anderen der Überführung der Sperreinrichtung **11** zwischen ihrer Sperrstellung und ihrer Wartungsstellung. Diese Kopplung ist derart ausgebildet, dass sich die Sperreinrichtung **11** immer dann in ihrer Wartungsstellung befindet, wenn die Spanneinrichtung **13** inaktiv ist. Umgekehrt befindet sich die Sperreinrichtung **11** immer dann in ihrer Sperrstellung, wenn die Spanneinrichtung **13** gespannt und mithin die Andrückrolle **7** gegen die Zuführrolle **6** gedrückt ist.

### Bezugszeichenliste

- 1: Zuführeinrichtung
- 2: Wickelmaterial
- 3: Rollenhalterung
- 4: Wickelrolle
- 5: Rotationsachse
- 6: Zuführrolle
- 7: Andrückrolle
- 8: Schneideinrichtung
- 9: Antriebsrichtung
- 10: Führungsspalt
- 11: Sperreinrichtung
- 12: Rastzahnscheibe
- 13: Spanneinrichtung
- 14: Spannelement
- 15: Feder
- 16: Spannhebel
- 17: Schwenkachse
- 18: Hakenabschnitt
- 19: Koppelelement
- 20: Nockenscheibe
- 21: Druckfläche
- 22: Nocken
- 23: Rundballenpresse
- 24: Rundballen
- 25: Gehäuse
- 26: Innenraum
- 27: Fördereinrichtung
- 28: Presskammer
- 29: Profilwalze
- 30: Förderkanal
- 31: Antriebsscheibe
- 32: Keilriemen
- 33: Gelenk
- 34: Rückstellfeder
- 35: Eingriffelement
- 36: Auswurftür
- 37: Umlenkrolle
- 38: Griff
- 39: Lagerrahmen
- 40: Lagerachse
- 41: Spanngriff

## Patentansprüche

1. Zuführeinrichtung (1) zur Zuführung von Wickelmaterial (2) in eine Presskammer (28) einer Rundballenpresse (23), umfassend
- mindestens eine Rollenhalterung (3) zur Aufnahme mindestens einer Wickelrolle (4),
- mindestens eine langgestreckte, um eine Rotationsachse (5) drehantreibbare Zuführrolle (6),
- mindestens eine langgestreckte, parallel zu der Zuführrolle (6) orientierte sowie der Zuführrolle (6) zugeordnete Andrückrolle (7) und
- mindestens eine Schneidvorrichtung (8),
wobei mittels Antriebs der Zuführrolle (6) in eine Antriebsrichtung (9) sukzessive Wickelmaterial (2) von der Wickelrolle (4) abziehbar ist,
wobei die Andrückrolle (7) gegen die Zuführrolle (6) spannbar ist, sodass Wickelmaterial (2), das in einem zwischen der Andrückrolle (7) und der Zuführrolle (6) ausgebildeten Führungsspalt (10) geführt ist, gegen die Zuführrolle (6) drückbar ist,
wobei die Schneidvorrichtung (8) ausgehend von einer Passivstellung, in der sie wirkungslos ist, in eine Aktivstellung überführbar ist, in der sie dazu geeignet ist, mit Wickelmaterial (2) einzugreifen und dieses durchzuschneiden,
wobei die Zuführrolle (6) mit einer Sperreinrichtung (11) zusammenwirkt, die bei Vorliegen in einer Sperrstellung eine Rotation der Zuführrolle (6) in eine der Antriebsrichtung (9) entgegengesetzte Drehrichtung sperrt,
wobei die Sperreinrichtung (11) in eine Wartungsstellung überführbar, bei deren Vorliegen eine Rotation der Zuführrolle (6) in beide Drehrichtungen relativ zu ihrer Rotationsachse (5) freigegeben ist,
die Sperreinrichtung (11) in der Wartungsstellung feststellbar ist, sodass eine selbsttätige Rückführung der Sperreinrichtung (11) von der Wartungsstellung in eine Sperrstellung unterbunden ist,
**dadurch gekennzeichnet, dass**
die Zuführrolle (6) mit einer Rastzahnscheibe (12) zusammenwirkt, die drehmomentenfest mit der Zuführrolle (6) verbunden ist und dazu geeignet ist,
mit der Sperreinrichtung (11) formschlüssig einzugreifen, wobei die Rastzahnscheibe (12) umlaufend eine Vielzahl von Rastzähnen aufweist.

2. Zuführeinrichtung (1) nach Anspruch 1, **dadurch gekennzeichnet, dass** die Andrückrolle (7) zwischen einer Spannstellung und einer Freistellung überführbar ist, wobei bei Vorliegen der Andrückrolle (7) in ihrer Spannstellung in dem Führungsspalt (10) geführtes Wickelmaterial (2) gegen die Zuführrolle (6) drückbar ist und bei Vorliegen der Andrückrolle (7) in ihrer Freistellung eine Breite des Führungsspalts (10) gegenüber einem Zustand, in dem die Andrückrolle (7) in ihrer Spannstellung vorliegt, vergrößert ist.

3. Zuführeinrichtung (1) nach Anspruch 2, **gekennzeichnet durch** eine Spanneinrichtung (13), mittels derer die Andrückrolle (7) ausgehend von ihrer Freistellung in ihre Spannstellung überführbar ist, wobei die Spanneinrichtung (13) vorzugsweise mindestens ein relativ zu der Andrückrolle (7) bewegliches Spannelement (14) sowie eine Feder (15) umfasst, die sich gegen miteinander korrespondierende Stützflächen des Spannelements (14) und der Andrückrolle (7) abstützt.

4. Zuführeinrichtung (1) nach Anspruch 3, **dadurch gekennzeichnet, dass** die Spanneinrichtung (13) relativ zu der Andrückrolle (7) verschwenkbar ist, sodass ein manueller Zugriff auf den Führungsspalt (10) freigebbar ist.

5. Zuführeinrichtung (1) nach Anspruch 3 oder 4, **gekennzeichnet durch** einen Spannhebel (16), der mit der Spanneinrichtung (13) zusammenwirken kann, wobei mittels des Spannhebels (16) eine Spannkraft auf die Spanneinrichtung (13) ausübbar ist, wodurch die Andrückrolle (7) ausgehend von ihrer Freistellung in ihre Spannstellung überführbar ist.

6. Zuführeinrichtung (1) nach Anspruch 5, **dadurch gekennzeichnet, dass** der Spannhebel (16) um eine Schwenkachse (17) schwenkbar ausgeführt ist, wobei vorzugsweise die Schwenkachse (17) ausmittig zu einer Mittelachse des Spannhebels (16) angeordnet ist, sodass eine Verschwenkung des Spannhebels (16) um die Schwenkachse (17) mit einer translatorischen Bewegung der Mittelachse relativ zu der Schwenkachse (17) einhergeht.

7. Zuführeinrichtung (1) nach Anspruch 6, **dadurch gekennzeichnet, dass** das Spannelement (14) der Spanneinrichtung (13) mindestens einen Hakenabschnitt (18) aufweist, mittels dessen das Spannelement (14) formschlüssig mit dem Spannhebel (16) eingreifen kann.

8. Zuführeinrichtung (1) nach einem der Ansprüche 3 bis 7, **gekennzeichnet durch** mindestens ein Koppelelement (19), mittels dessen die Spanneinrichtung (13) mit der Sperreinrichtung (11) koppelbar ist, sodass eine Betätigung der Spanneinrichtung (13) eine Betätigung der Sperreinrichtung (11) bedingt, sodass eine Überführung der Andrückrolle (7) von ihrer Spannstellung in ihre Freistellung an eine Überführung der Sperreinrichtung (11) von ihrer Sperrstellung in ihre Wartungsstellung gekoppelt ist.

9. Zuführeinrichtung (1) nach Anspruch 8, **dadurch gekennzeichnet, dass** das Koppelelement (19) eine Nockenscheibe (20) und die Sperreinrichtung (11) eine der Nockenscheibe (20) zugeordnete Druckfläche (21) umfassen, wobei die Nockenscheibe (20) derart mit der Spanneinrichtung (13) zusammenwirkt, dass eine Überführung der Spanneinrichtung (13) von ihrer Spannstellung in ihre Freistellung mit einer Rotation der Nockenscheibe (20) einhergeht, und wobei die Nockenscheibe (20) derart relativ zu der Druckfläche (21) angeordnet ist, dass im Zuge der Rotation der Nockenscheibe (20) ein Nocken (22) der Nockenscheibe (20) mit der Druckfläche (21) eingreift, sodass die Sperreinrichtung (11) ausgehend von ihrer Sperrstellung auslenkbar und dadurch in ihre Wartestellung überführbar ist.

10. Landwirtschaftliche Rundballenpresse (23) zur Herstellung von aus Erntegut gepressten Rundbällen (24), umfassend
- mindestens ein Gehäuse (25), das einen Innenraum (26) der Rundballenpresse (23) begrenzt,
- mindestens eine Fördereinrichtung (27), mittels derer zu pressendes Erntegut dem Innenraum (26) förderbar ist,
- mindestens eine innerhalb des Innenraums (26) ausgebildete Presskammer (28), innerhalb derer das zugeführte Erntegut zu einem Rundballen (24) pressbar ist, sowie
- mindestens eine Zuführeinrichtung (1) nach einem der Ansprüche 1 bis 9.

## Claims

1. A feeding device (1) for feeding wrapping material (2) into a pressing chamber (28) of a round baler (23), comprising
- at least one roll holder (3) for receiving at least one wrap roll (4),
- at least one elongated infeed roller (6) which can be driven about a rotational axis (5),
- at least one elongated pressure roller (7) orientated parallel to the infeed roller (6) and associated with the infeed roller (6), and
- at least one cutting device (8),
wherein, by driving the infeed roller (6) in a drive direction (9), wrapping material (2) can be gradually drawn from the wrap roll (4),
wherein the pressure roller (7) can be clamped against the infeed roller (6) so that wrapping material (2) which is guided in a guide gap (10) formed between the pressure roller (7) and the infeed roller (6) can be pressed against the infeed roller (6), wherein, starting from a passive position in which it is ineffective, the cutting device (8) can be moved into an active position in which it is suitable for engaging with wrapping material (2) in order to cut it through,
wherein the infeed roller (6) cooperates with a locking device (11) which, when in a locked position, prevents a rotation of the infeed roller (6) in a rotational direction opposite to the drive direction (9),
wherein the locking device (11) can be moved into a maintenance position which allows rotation of the infeed roller (6) in both rotational directions relative to its rotational axis (5), the locking device (11) can be fixed in the maintenance position so that a self-actuated return of the locking device (11) from the maintenance position into the locked position is prohibited,
**characterized in that**
the infeed roller (6) cooperates with a ratchet disk (12) which is connected to the infeed roller (6) in a torque-resisting manner and is therefore capable of interlockingly engaging with the locking device (11), wherein the circumference of the ratchet disk (12) has a plurality of ratchet teeth.

2. The feeding device (1) according to claim 1, **characterized in that** the pressure roller (7) can be moved between a locked position and a released position wherein, when the pressure roller (7) is in its locked position, wrapping material (2) guided in the guide gap (10) can be pressed against the infeed roller (6) and when the pressure roller (7) is in its released position, a width of the guide gap (10) is enlarged compared with a condition in which the pressure roller (7) is in its locked position.

3. The feeding device (1) according to claim 2, **characterized by** a clamping device (13) by means of which the pressure roller (7) can be moved from its starting released position into its locked position, wherein the clamping device (13) preferably comprises at least one clamping element (14) which can be moved relative to the pressure roller (7) as well as a spring (15) which bears against mutually corresponding bearing surfaces of the clamping element (14) and the pressure roller (7).

4. The feeding device (1) according to claim 3, **characterized in that** the clamping device (13) can be pivoted relative to the pressure roller (7) to allow manual access to the guide gap (10).

5. The feeding device (1) according to claim 3 or claim 4, **characterized by** a clamping lever (16) which can cooperate with the clamping device (13), wherein a clamping force can be exerted on the clamping device (13) by means of the clamping lever (16), whereupon the pressure roller (7) can be moved from its starting released position into its clamped position.

6. The feeding device (1) according to claim 5, **characterized in that** the clamping lever (16) is configured so as to be pivotable about a pivot axis (17), wherein preferably, the pivot axis (17) is eccentrically disposed with respect to a central axis of the clamping lever (16), so that pivoting of the clamping lever (16) about the pivot axis (17) is associated with a translational movement of the central axis relative to the pivot axis (17).

7. The feeding device (1) according to claim 6, **characterized in that** the clamping element (14) of the clamping device (13) has at least one hook section (18), by means of which the clamping element (14) can interlockingly engage with the clamping lever (16).

8. The feeding device (1) according to one of claims 3 to 7, **characterized by** at least one coupling element (19), by means of which the clamping device (13) can be coupled to the locking device (11) so that actuation of the clamping device (13) necessitates actuation of the locking device (11) so that a movement of the pressure roller (7) from its clamped position into its released position is coupled with a movement of the locking device (11) from its locked position into its maintenance position.

9. The feeding device (1) according to claim 8, **characterized in that** the coupling element (19) comprises a cam disk (20) and the locking device (11) comprises a pressure surface (21) associated with the cam disk (20), wherein the cam disk (20) cooperates with the clamping device (13) such that a movement of the clamping device (13) from its clamped position into its released position is associated with a rotation of the cam disk (20), and wherein the cam disk (20) is disposed relative to the pressure surface (21) such that during rotation of the cam disk (20), a cam (22) of the cam disk (20) engages with the pressure surface (21) so that the locking device (11) can be pivoted out of its locked position and thus moved into its maintenance position.

10. An agricultural round baler (23) for the production of round bales (24) pressed from crop, comprising
- at least one housing (25) which delimits an internal space (26) of the round baler (23),
- at least one conveying device (27), by means of which crop to be pressed can be conveyed into the internal space (26),
- at least one pressing chamber (28) constructed within the internal space (26), within which the conveyed crop can be pressed into a round bale (24), as well as
- at least one infeed device (1) as claimed in one of claims 1 to 9.

## Revendications

1. Équipement d'amenée (1) pour amener du matériau d'enrubannage (2) dans une chambre de pressage (28) d'une presse à balles rondes (23), incluant :
- au moins une fixation de rouleau (3) pour recevoir au moins un rouleau d'enrubannage (4),
- au moins un rouleau d'amenée (6) allongé, entraînable en rotation autour d'un axe de rotation (5),
- au moins un rouleau de pression (7) allongé, orienté parallèlement au rouleau d'amenée (6) ainsi qu'associé au rouleau d'amenée (6), et
- au moins un dispositif de coupe (8),
du matériau d'enrubannage successif (2) pouvant être dévidé du rouleau d'enrubannage (4) au moyen d'un actionnement du rouleau d'amenée (6) dans un sens d'actionnement (9),
le rouleau de pression (7) pouvant être plaqué contre le rouleau d'amenée (6), de façon que du matériau d'enrubannage (2), qui est guidé dans un interstice de guidage (10) ménagé entre le rouleau de pression (7) et le rouleau d'amenée (6), puisse être appliqué contre le rouleau d'amenée (6),
le dispositif de coupe (8) pouvant être transféré depuis une position passive, dans laquelle il est inactif, vers une position active dans laquelle il est apte à agir sur le matériau d'enrubannage (2) et à le sectionner,
le rouleau d'amenée (6) coopérant avec un équipement de blocage (11) qui, en présence d'une position de blocage, empêche la rotation du rouleau d'amenée (6) dans un sens de rotation opposé au sens d'actionnement (9),
l'équipement de blocage (11) pouvant être transféré dans une position de maintenance en présence de laquelle une rotation du rouleau d'amenée (6) dans les deux sens de rotation par rapport à son axe de rotation (5) est possible, l'équipement de blocage (11) pouvant être immobilisé dans la position de maintenance, de façon à interdire un retour automatique de l'équipement de blocage (11) de la position de maintenance vers une position de blocage, **caractérisé en ce que** le rouleau d'amenée (6) coopère avec un disque denté d'arrêt (12) qui est solidarisé en rotation au rouleau d'amenée (6) et est apte à agir par complémentarité de formes avec l'équipement de blocage (11), le disque denté d'arrêt (12) comportant en périphérie une pluralité de dents d'arrêt.

2. Équipement d'amenée (1) selon la revendication 1, **caractérisé en ce que** le rouleau de pression (7) peut être transféré entre une position de pression et une position de libération, du matériau d'enrubannage (2) guidé dans l'interstice de guidage (10) pouvant être appliqué contre le rouleau d'amenée (6) lorsque le rouleau de pression (7) est dans sa position de pression, et une largeur de l'interstice de guidage (10) étant agrandie par rapport à un état dans laquelle le rouleau de pression (7) est dans sa position de pression lorsque le rouleau de pression (7) est dans sa position de libération.

3. Équipement d'amenée (1) selon la revendication 2, **caractérisé par** un équipement de pression (13) au moyen duquel le rouleau de pression (7) peut être transféré depuis sa position de libération vers une position de pression, l'équipement de pression (13) incluant de préférence au moins un élément de pression (14) mobile par rapport au rouleau de pression (7) ainsi qu'un ressort (15) qui prend appui sur des surfaces d'appui mutuellement correspondantes de l'élément de pression (14) et du rouleau de pression (7).

4. Équipement d'amenée (1) selon la revendication 3, **caractérisé en ce que** l'équipement de pression (13) est pivotable par rapport au rouleau de pression (7), ce qui permet une intervention manuelle dans l'interstice de guidage (10).

5. Équipement d'amenée (1) selon la revendication 3 ou 4, **caractérisé par** un levier de pression (16) qui peut coopérer avec l'équipement de pression (13), une force de pression pouvant être exercée sur l'équipement de pression (13) au moyen du levier de pression (16), de sorte que le rouleau de pression (7) peut être transféré depuis sa position de libération vers sa position de pression.

6. Équipement d'amenée (1) selon la revendication 5, **caractérisé en ce que** le levier de pression (16) est conçu pivotant autour d'un axe de pivotement (17), de préférence l'axe de pivotement (17) étant disposé de façon excentrée par rapport à un axe médian du levier de pression (16), de sorte qu'un pivotement du levier de pression (16) autour de l'axe de pivotement (17) s'accompagne d'un déplacement en translation de l'axe médian par rapport à l'axe de pivotement (17).

7. Équipement d'amenée (1) selon la revendication 6, **caractérisé en ce que** l'élément de pression (14) de l'équipement de pression (13) comprend au moins une portion de crochet (18) au moyen de laquelle l'élément de pression (14) peut agir par complémentarité de formes sur le levier de pression (16).

8. Équipement d'amenée (1) selon une des revendications 3 à 7, **caractérisé par** au moins un élément de couplage (19) au moyen duquel l'équipement de pression (13) est couplable avec l'équipement de blocage (11), de sorte qu'un actionnement de l'équipement de pression (13) détermine un actionnement de l'équipement de blocage (11), de sorte qu'un transfert du rouleau de pression (7) depuis sa position de pression vers sa position de libération est couplé à un transfert de l'équipement de blocage (11) depuis sa position de blocage vers sa position de maintenance.

9. Équipement d'amenée (1) selon la revendication 8, **caractérisé en ce que** l'élément de couplage (19) inclut un disque à came (20) et l'équipement de blocage (11) inclut une surface de contact (21) associée au disque à came (20), le disque à came (20) coopérant avec l'équipement de pression (13) de façon qu'un transfert de l'équipement de pression (13) depuis sa position de pression vers sa position de libération s'accompagne d'une rotation du disque à came (20), et le disque à came (20) étant disposé par rapport à la surface de contact (21) de façon qu'au cours de la rotation du disque à came (20), une came (22) du disque à came (20) coopère avec la surface de contact (21), de sorte que l'équipement de blocage (11) peut être sorti de sa position de blocage et ainsi transféré dans sa position de maintenance.

10. Presse agricole à balles rondes (23) pour fabriquer des balles rondes (24) pressées à partir de produit de récolte, incluant
- au moins un carter (25) qui limite un espace intérieur (26) de la presse à balles rondes (23),
- au moins un équipement de convoyage (27) au moyen duquel du produit de récolte à presser peut être convoyé vers l'espace intérieur (26) ,
- au moins une chambre de pressage (28) qui est ménagée à l'intérieur de l'espace intérieur (26) et à l'intérieur de laquelle le produit de récolte amené peut être pressé en forme de balle ronde (24), ainsi que
- au moins un équipement d'amenée (1) selon une des revendications 1 à 9.
